(19) Europäisches Patentamt
European Patent Office
Office européen des brevets

(11) **EP 1 828 739 B1**

(12) **EUROPÄISCHE PATENTSCHRIFT**

(45) Veröffentlichungstag und Bekanntmachung des Hinweises auf die Patenterteilung:
**28.03.2012 Patentblatt 2012/13**

(21) Anmeldenummer: 05819308.7

(22) Anmeldetag: **20.12.2005**

(51) Int Cl.:
*G01M 5/00* (2006.01)   *G01M 11/08* (2006.01)

(86) Internationale Anmeldenummer:
**PCT/EP2005/013736**

(87) Internationale Veröffentlichungsnummer:
**WO 2006/069680 (06.07.2006 Gazette 2006/27)**

(54) **VERFAHREN UND VORRICHTUNG ZUM ERFASSEN MECHANISCHER BELASTUNGEN AN EINER ROHRLEITUNG, INSBESONDERE EINER EINGEERDETEN ROHRLEITUNG**

METHOD AND DEVICE FOR DETECTING MECHANICAL STRESS TO A PIPE, PARTICULARLY A PIPE WHICH IS BURIED IN THE GROUND

PROCEDE ET DISPOSITIF DE DETECTION DE CONTRAINTES MECANIQUES SUR UN TUYAU, NOTAMMENT SUR UN TUYAU SOUTERRAIN

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.12.2004  DE 102004061733**
**30.11.2005  DE 102005057055**

(43) Veröffentlichungstag der Anmeldung:
**05.09.2007  Patentblatt 2007/36**

(73) Patentinhaber: **egeplast**
**Werner Strumann GmbH & Co. KG**
**48268 Greven (DE)**

(72) Erfinder:
• **BERGER, Wolfgang**
**99423 Weimar (DE)**
• **DÖRING, Heinz**
**09648 Mittweida (DE)**

(74) Vertreter: **Fritz & Brandenburg**
**Patentanwälte**
**Postfach 45 04 20**
**50879 Köln (DE)**

(56) Entgegenhaltungen:
**DE-A1- 4 018 379    DE-A1- 19 725 431**
**US-A- 5 182 449**

**Beschreibung**

Die Erfindung betrifft ein Verfahren und eine Vorrichtung zum Erfassen mechanischer Belastungen an einer Rohrleitung, insbesondere einer eingeerdeten Rohrleitung nach dem Oberbegriff des Anspruchs 1 bzw. 10

Rohrleitungen, insbesondere eingeerdete Rohrleitungen, unterliegen jahreszeitlich und wetterbedingten mechanischen Belastungen infolge thermischer Ausdehnungen bzw. Schrumpfungen, die mit fortschreitendem Alter der Rohrleitung zu einer zunehmenden Materialermüdung, einer abnehmenden Reversibilität der Materialveränderungen und daher zu einem steigenden Leckagerisiko der Rohrleitung führen. Damit geht insbesondere bei Rohrleitungen, die umweltgefährdende Stoffe, wie Mineralöl oder andere Chemikalien führen, ein über die Jahre zunehmendes Havarierisiko einher. Die physikalischen Parameter und Zustände der Rohrleitung, wie Temperatur, thermische Dehnung und Schrumpfung, oder Leckagestellen, müssen daher kontinuierlich überwacht, bzw. schnell und genau erfasst werden.

Aus dem Stand der Technik sind hierzu eine Reihe unterschiedlicher Verfahren bekannt. So wird beispielsweise ein faseroptisches Temperaturmessverfahren angewendet, bei dem unter der Ausnutzung einer im Innern eines Lichtwellenleiters erzeugten temperaturabhängigen Lichtstreuung die Temperatur einer Rohrleitung, und damit lokale Temperaturanomalien, ortsaufgelöst detektiert werden können. Weiterhin wird in der deutschen Patentschrift DE 197 25 431 C2 eine Vorrichtung und ein Verfahren zur kombinierten Lagebestimmung und Leckageortung einer unterirdisch verlegten Rohrleitung beschrieben, mit dem der Verlegeort einer Rohrleitung vor dem Ausführen von Erdarbeiten oberirdisch ermittelt werden kann und gleichzeitig eine Temperaturerfassung der Rohrleitungsstrecke möglich ist.

Derartige Verfahren bieten zwar die Möglichkeit, eine Rohrleitung zu orten, oder lokale Anomalien an der Rohrleitung aufzuspüren. Allerdings sind sie nicht dafür ausgelegt, das momentane Havarierisiko einer Rohrleitung zu erfassen. Bereits lange, bevor es zu einer Leckage an der Rohrleitung kommt, setzen Materialermüdungen ein und zeigen sich in Veränderungen des thermischen Ausdehnungsverhaltens. Diese Materialermüdung führt zu abnormalen Längenänderungen der Rohrleitung oder einer sich im Laufe der Zeit offenbarenden charakteristischen Tendenz der Rohrleitungslänge. Die Länge der Rohrleitung und ihre Veränderung muss aus diesem Grunde gemessen und überwacht werden. Bei den aus dem Stand der Technik bekannten Verfahren und Vorrichtungen geht jedoch die Länge der Rohrleitung als mehr oder weniger konstanter und bekannter Parameter in die Messung der physikalischen Parameter ein und ist somit von der Rohrleitungsüberwachung ausgeschlossen.

Es ergibt sich somit die Aufgabe der Erfindung, ein Verfahren zum Erfassen mechanischer Belastungen an einer Rohrleitung, insbesondere einer eingeerdeten Rohrleitung, anzugeben, mit dem eine Rohrleitungslänge schnell, zuverlässig und wirtschaftlich über beliebige Zeiträume hinweg gemessen und überwacht werden kann.

Die Lösung der Aufgabe erfolgt mit einem Verfahren zum Erfassen mechanischer Belastungen an einer Rohrleitung gemäß der Definition des Anspruchs 1 und einer Vorrichtung zum Ausführen des Verfahrens mit den Merkmalen des Anspruchs 10, wobei die Unteransprüche zweckmäßige bzw. vorteilhafte Ausführungsformen von Verfahren und Vorrichtung enthalten.

Erfindungsgemäß beruht das Verfahren auf dem Bestimmen einer Längenänderung und/oder einer Länge mindestens eines in oder an der Rohrleitung verlegten Wellenleiters. Dazu werden folgende Verfahrensschritten ausgeführt: Als erstes wird ein periodisches Eingangssignal mittels abstimmbarem Generator in den Wellenleiter eingekoppelt. Zeitlich Parallel dazu wird ein periodisches Ausgangssignal aus dem Wellenleiter ausgekoppelt. Das Eingangs- und das Ausgangssignal werden einer Phasenvergleichsschaltung zum Erzeugen eines Phasendifferenzsignals zugeführt. Die Eingangsfrequenz des Eingangssignals wird nunmehr so verändert, dass das erzeugte Phasendifferenzsignal einen konstanten Wert hat. Dieses Phasendifferenzsignal wird überwacht und zeigt Längenänderungen des Wellenleiters und somit der Rohrleitung an, wenn ein sich veränderndes Phasendifferenzsignal signalisiert wird. Ist der Zustand des konstanten Wertes der Phasendifferenz erreicht, ist die elektrische oder optische Länge des Wellenleiters und damit der Rohrleitung bekannt.

Bei dem erfindungsgemäßen Verfahren wird somit auf die physikalischen Gesetzmäßigkeiten einer Wellenausbreitung in einem Wellenleiter zurückgegriffen. Die Wellenlänge im Wellenleiter ist mit der an den Enden des Wellenleiters abzugreifenden Phase der dabei sich zeitlich und räumlich veränderlichen physikalischen Messgröße korreliert. Dabei weisen das Eingangssignal und das Ausgangssignal eine im allgemeinen zeitlich veränderliche Phasendifferenz auf. Durch eine entsprechende Regulierung der Frequenz des Eingangssignals und einer damit einhergehenden Wellenausbreitung im Wellenleiter ist es möglich, die Phasendifferenz zeitlich konstant zu gestalten. Dieser zeitlich konstante Phasendifferenzwert, bzw. das mit diesem Wert zusammenhängende Signal ist eine besonders einfach zu detektierende Überwachungsgröße für die Änderungen der optischen oder elektrischen Länge des Wellenleiters, denn für eine fest vorgegebene Frequenz des Eingangssignals und eine damit zusammen hängende Wellenausbreitung im Wellenleiter ändert sich diese Überwachungsgröße nur infolge einer Änderung der elektrischen oder optischen Länge des Wellenleiters. Bei einer entsprechend groß gewählten Frequenz des Eingangssignals und einer damit zusammenhängenden kleinen Wellenlänge der Welle im Wellenleiter lassen sich entsprechend feine Längenänderungen über der gesamten Rohrleitungslänge zuverlässig und mit hoher Auflösung detektieren.

Das Eingangssignal und/oder das Ausgangssignal weist bei einer ersten Ausführungsform einen harmonischen Signalverlauf auf. Derartige Signalverläufe lassen sich einfach durch eine Vielzahl von Signalerzeugungsvorrichtungen generieren.

Das Eingangssignal und/oder das Ausgangssignal kann aber auch einen nicht harmonischen, insbesondere einen rechteckförmigen, Signalverlauf aufweisen. Derartigen Signalverläufe lassen sich besonders gut digitalisieren und bearbeiten.

Das Ausgangssignal kann ein durch den Wellenleiter transmittiertes Eingangssignal sein. Ebenso ist es jedoch auch möglich, dass das Ausgangssignal ein aus dem Wellenleiter reflektiertes Eingangssignal ist. Transmittierte Signale lassen sich messtechnisch leicht erfassen. Das Erfassen reflektierter Signale erfordern zwar einen etwas größeren messtechnischen Aufwand für die Trennung des Eingangs- vom Ausgangssignal, ermöglichen es jedoch, den Einkoppelpunkt des Eingangssignals und den Auskoppelpunkt des Ausgangssignals möglichst nah beieinander anzuordnen und im Idealfall in einem Gerät zu vereinen.

Das Eingangssignal kann in Form einer periodisch intensitätsmodulierten elektromagnetischen Strahlung in einen dielektrischen Wellenleiter, insbesondere einen Lichtwellenleiter oder einen Hohlleiter, eingekoppelt und das Ausgangssignal in Form einer periodisch intensitätsmodulierten elektromagnetischen Strahlung ausgekoppelt werden. Eine derartige Vorgehensweise kann unter Rückgriff auf verlustarme, über eine große Wegstrecke verlegte und vor allem elektrisch passiv arbeitende Lichtleitfasern erfolgen.

Das Eingangssignal kann bei einer weiteren Verfahrensvariante in Form eines frequenzmodulierten elektrischen Signals, insbesondere einer Wechselspannung, in einen elektrisch leitenden Wellenleiter, insbesondere ein elektrisch leitendes Kabel, eingekoppelt und das Ausgangssignal in Form eines periodisch modulierten elektrischen Signals ausgekoppelt werden. Derartige Signale lassen sich messelektronisch in Form von Wechselspannungen in einfacher Weise auswerten.

Eine bevorzugte Vorrichtung zum Ausführen des Verfahrens weist einen spannungsgesteuerten oder einen digital gesteuerten Oszillator zum Erzeugen des periodischen Eingangssignals und einen mit dem Eingangssignal und dem Ausgangssignal des Wellenleiters beaufschlagten, einen Phasendifferenzwert ausgebenden Phasendiskriminator auf.

Weiterhin ist bei einer Ausführungsform eine Teilereinheit zur Frequenzveränderung des spannungsgesteuerten Oszillators in Verbindung mit einem durch den Phasenwert beeinflussten Vor-/Rückwärtszähler zur Ansteuerung der Teilereinheit vorgesehen. Dadurch kann die durch den Oszillator erzeugte Eingangsfrequenz des Eingangssignals durch den ermittelten Phasenwert selbst so geregelt werden, dass sich ein konstanter Phasenwert ergibt.

Bei einer Ausführungsform ist eine durch den gesteuerten Oszillator beeinflusste modulierbare Lichtquelle in optischer Kopplung mit einem Lichtwellenleiter sowie einem zwischen Lichtwellenleiter und digitalem Phasendiskriminator zwischengeschalteten Fotoelement vorgesehen. Die modulierbare Lichtquelle bzw. das Fotoelement stellen hierbei Signalwandler zum Umformen elektrischer und bzw. aus Lichtsignalen dar.

Die modulierbare Lichtquelle kann in einer Ausführungsform eine Pockels-Zelle aufweisen. Dieses optoelektronische Bauelement ermöglicht die Generierung quasi rechteckig modulierter Lichtsignale.

Bei einer anderen Ausführungsform ist eine durch den gesteuerten Oszillator beeinflusste Schallquelle, insbesondere ein Ultraschallgenerator, in akustischer Kopplung mit einem Schallwellenleiter sowie einem zwischen Schallwellenleiter und digitalem Phasendiskriminator zwischengeschaltetem Schallempfänger, insbesondere einem Ultraschallmikrophon, vorgesehen. Die Schallquelle und der Schallempfänger bilden hierbei Signalwandler für die Grundkonfiguration aus Oszillator und Diskriminator.

Bei einer weiteren Ausführungsform ist der Wellenleiter in Form eines piezoelektrischen Wellenleiters ausgeführt, wobei zwischen dem gesteuerten Oszillator und dem piezoelektrischen Wellenleiter ein akustischer Transducer oder ein Spannungsgeber und dem piezoelektrischen Wellenleiter und dem digitalen Phasendiskriminator eine elektrischer Spannungsempfänger oder ein akustischer Empfänger angeordnet ist.

Schließlich kann der Wellenleiter bei einer Ausführungsform auch ein elektrischer Leiter sein, an dem elektrische Eingangs- und Ausgangssignale in Form von Spannungswerten abgegriffen werden.

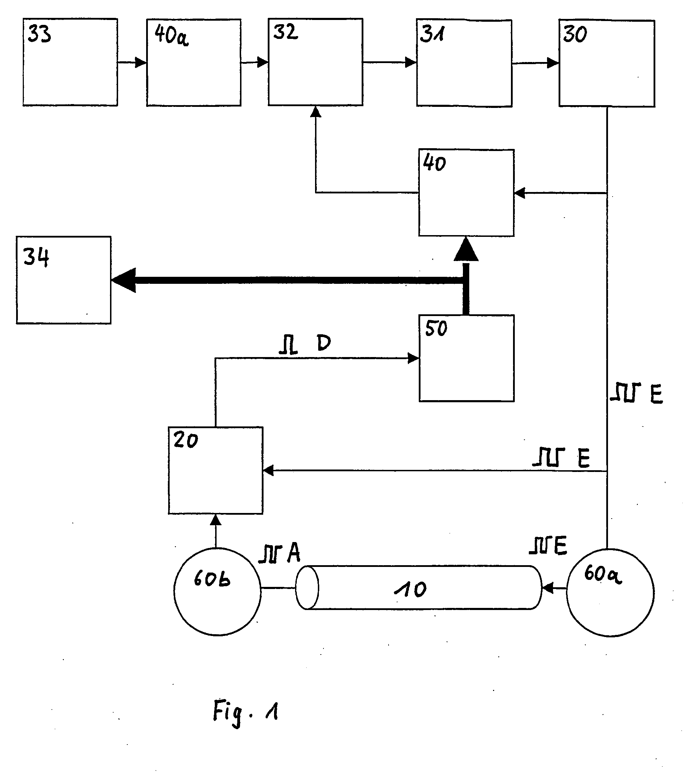

Das erfindungsgemäße Verfahren und die Vorrichtung zum Ausführen des Verfahrens sollen nun anhand von Ausführungsbeispielen näher erläutert werden. Zur Verdeutlichung dienen die Figuren 1 bis 4. Es werden für gleiche bzw. gleichwirkende Teile und Verfahrensschritte die selben Bezugszeichen verwendet.

Es zeigt:

Fig. 1 ein beispielhaftes Blockschaltbild des Verfahrens bzw. der Vorrichtung zum Ausführen des Verfahrens,

Fig. 2 einen beispielhaften Signalwandler in Form einer modulierten Lichtquelle und einem Fotoelement mit einem Lichtwellenleiter,

Fig. 3 einen beispielhaften Signalwandler in Form einer Ultraschallquelle und eines Ultraschallmikrophons mit einem Schallwellenleiter,

Fig. 4 einen beispielhaften Signalwandler in Form eines Ultraschalltransducers und eines Spannungsabgriffs mit einem piezoelektrischen Wellenleiter.

Fig. 1 zeigt in einem beispielhaften Blockschaltbild wesentliche Verfahrensschritte und Komponenten einer Vorrichtung zum Ausführen des Verfahrens. Ein zeitlich periodisches Eingangssignal E wird auf einen Eingang des Wellenleiters 10 geleitet und pflanzt sich durch den Wellenleiter als zeitlich und räumlich periodische Welle fort. Am Ausgang des Wellenleiters 10 wird ein zeitlich periodisches Ausgangssignal A abgegriffen. Das Eingangssignal E und das Ausgangssignal A werden an einen Phasendiskriminator 20 angelegt. Dieser liefert ein Phasendifferenzsignal D. Die Beobachtung der Ausbreitung der Welle im Wellenleiter erfolgt bei der Darstellung aus Fig. 1 in einer Transmissionskonfiguration, bei der sich der Einkoppelpunkt und der Auskoppelpunkt für das Eingangs- bzw. Ausgangssignal am Wellenleiter an dessen entgegengesetzten Enden befinden. Eine Reflexionskonfiguration kann im Rahmen fachmännischen Handelns ebenfalls realisiert werden.

Das zeitlich periodische Eingangssignal E wird bei dem Beispiel aus Fig. 1 durch einen Frequenzgenerator erzeugt, der einen z.B. spannungsgesteuerten Oszillator (auch bekannt unter der Bezeichnung voltage controled oscillator, VCO) 30, einen Tiefpass 31, einen analogen Phasendiskriminator 32, einen Schwingquarz 33, einen Messwertausgang 34 und eine Teilereinheit 40 und 40a zur Generierung eines Teilerverhältnisses N bzw. M enthält. Die Steuerung des Frequenzgenerators erfolgt selbsttätig durch das am digitalen Phasendiskriminator 20 erzeugte Phasendifferenzsignal D durch eine Veränderung des in der Teilereinheit 40 und 40a erzeugten Teilerverhältnisses. Hierzu wird das am digitalen Phasendiskriminator 20 abgegriffene Phasendifferenzsignal auf einen Vor-/Rückwärtszähler 50 gegeben. Dieser steuert die Teilereinheit 40 an und verändert das Teilerverhältnis N und somit die am VCO 30 synthetisierte Frequenz des Eingangssignals E. Der dadurch bewirkte Regelvorgang wird durch diese Schaltung so lange ausgeführt, bis das Phasendifferenzsignal einen zeitlich konstanten Sollwert aufweist.

Dabei ist eine zeitlich konstante Phasendifferenz zwischen Eingangssignal E und Ausgangssignal A von $\Delta\varphi = 0$ als Zielwert für diesen Regelvorgang besonders vorteilhaft. In diesem Fall beträgt die Länge des Wellenleiters 10 ein ganzzahliges Vielfaches der sich durch den Wellenleiter ausbreitenden Welle. Die durch den VCO 30 synthetisierte Frequenz des Eingangssignals ergibt sich dabei als ein digitaler Wert des durch die Teilereinheit 40a bewirkten Teilerverhältnisses M.

Bei einer Längenveränderung des Wellenleiters 10 gegenüber seiner Ruhelänge stellt sich sofort eine Phasendifferenz zwischen dem Eingangs- und dem Ausgangssignal ein, bei dem $\Delta\varphi \neq 0$ ist. Das entsprechende Phasendifferenzsignal D wird über die Messwertausgabe 34 ausgegeben und signalisiert unmittelbar die Längenveränderung des Wellenleiters und damit der Rohrleitung, die in Form eines Warnsignals an eine Überwachungseinrichtung ausgegeben werden kann.

Die Bedingung einer verschwindenden Phasendifferenz $\Delta\varphi = 0$ zwischen dem Eingangssignal E und dem Ausgangssignal A kann in Verbindung mit einem durch einen Microcontroller ausgeführten Messprogramm für eine automatisch ausgeführte absolute Längenmessung des Wellenleiters 10 genutzt werden. Hierzu wird der VCO 30 durch den im Zusammenhang mit Fig. 1 beschriebenen Regelkreis auf eine erste Ausgangsfrequenz $f_1$ eingeregelt, bei der die Bedingung $\Delta\varphi = 0$ erstmalig erfüllt ist. Bei einer bekannten Ausbreitungsgeschwindigkeit c der Welle im Wellenleiter 10 berechnet sich die Wellenlänge $\lambda_1$ der sich in dem Wellenleiter ausbreitenden Welle durch die Beziehung: $c/f_1 = \lambda_1$. Diese Wellenlänge entspricht einem ganzzahligen Vielfachen der Länge des Wellenleiters 10 und es gilt somit: $L = k_1\lambda_1$, wobei L die unbekannte Länge des Wellenleiters und $k_1$ ein unbekannter ganzzahliger Faktor ist. Wird nun durch die Steuerung des Microcontrollers die durch den VCO erzeugte Frequenz langsam erhöht, kann durch den Regelkreis aus Fig. 1 eine neue Frequenz $f_2$ eingeregelt werden, für die die Bedingung $\Delta\varphi = 0$ ebenfalls erfüllt ist und für die somit gilt: $c/f_2 = \lambda_2$ mit $L = (k_1 + 1)\lambda_2$. Durch das Auflösen dieses Gleichungssystems ergibt sich die absolute Länge L des Wellenleiters durch

$$L = \lambda_2 \ (1 - \lambda_2/\lambda_1)^{-1}.$$

Vorteilhafterweise wird die absolute Längenbestimmung des Wellenleiters so ausgeführt, dass der VCO 30 innerhalb eines vorgegebenen Frequenzintervalls kontinuierlich durchgestimmt wird, während am Phasendiskriminator 20 die jeweilige Phasendifferenz ermittelt und in Form des Phasendifferenzsignals D ausgegeben wird, während gleichzeitig die Frequenz innerhalb des gewählten Frequenzintervalls bestimmt wird, für die $\Delta\varphi = 0$ ermittelt worden ist. Die Messwertausgabe 34 weist in diesem Fall eine zusätzliche Zähleinheit auf, die jeden durch den VCO 30 ausgegebenen Frequenzwert $f_1$ speichert und diesem eine Nummerierung i zuordnet, sobald der Phasendiskriminator den Wert $\Delta\varphi = 0$ als Phasendifferenzwert D liefert. Hierzu wird eine erste Frequenz $f_0$ innerhalb des Frequenzintervalls bestimmt, bei der $\Delta\varphi = 0$ erstmalig gilt und bei der die Frequenzzählung beginnt. Die absolute Länge L des Wellenleiters wird dann durch eine lineare Regression innerhalb einer Recheneinheit gewonnen, indem die Frequenzen $f_1$ in der Form $(f_1 - f_0)/c$ über der Nummerierung i aufgetragen und durch eine Regressionsgerade gemittelt werden. Der Anstieg m der Regressionsgeraden beträgt dann $m = 1/L$. Ein derartiger Ablauf zum Messen der absoluten Länge des Wellenleiters bzw. der Rohrleitung kann in einer sehr einfachen Weise durch einen Mikrocontroller oder Mikrocomputer in Form eines Smart-Sensors ausgeführt werden, wobei der geschilderte Verfahrensalgorithmus implementiert sein kann.

Auf diese Weise lassen sich jahreszeitlich oder wetterbedingte Veränderungen der Rohrleitungslänge über große Zeiträume hinweg kontinuierlich erfassen, protokollieren und somit überwachen.

Zur Erfassung mechanischer Beanspruchungen insbesondere für eingeerdete Rohrleitungen werden an der Rohrwandung bevorzugt mehrere Wellenleiter platziert, die insbesondere einen charakteristischen Verlauf bezüglich der Rohrlängsachse aufweisen können. So kann beispielsweise eine erste Gesamt-heit von einem oder mehreren Wellenleitern parallel zur Rohrlängsachse entlang der Mantellinien des Rohrleitungszylinders verlaufen, während ein dritter Wellenleiter schrauben- oder spulenartig um das Rohr verlaufend angeordnet ist. Dabei registriert die Gesamtheit der ersten Wellenleiter eine Veränderung der Längsausdehnung der Rohrleitung, während der schrauben- oder spulenartig gewundene Wellenleiter Veränderungen des Rohrumfangs registriert, die bei einer hohen Windungszahl des Wellenleiters mit einer sehr großen Genauigkeit und Empfindlichkeit ausgeführt werden kann.

Die Auflösung und Genauigkeit der Vorrichtung bzw. des Verfahrens ist bei einer hinreichend genau bekannten Ausbreitungsgeschwindigkeit der Wellen im Wellenleiter nur von der Stabilität des Quarzoszillators 33 und des Phasendiskriminators abhängig. Analoge Baugruppen entfallen vollkommen und wirken sich ebenfalls nicht auf die Genauigkeit aus. Bei einer Frequenzregelung mit einem Zielwert der Phasendifferenz von $\Delta\varphi$ = 0 ist die Linearität des Phasendiskriminators untergeordnet. Weiterhin liegt das Messergebnis unmittelbar in digitaler Form vor, sodass Fehler durch eine A/D-Wandlung nicht auftreten können. Innerhalb des Fangbereichs des VCO sind alle Einstellungen über die Teilerverhältnisse M und N oder die Steuerung des Zählers digital vorzunehmen und es werden alle Ergebnisse digital ausgewertet. Alle Vorrichtungskomponenten können aus diesem Grund auch als Smart-Sensorik mit einer integrierten Mikrokontrollersteuerung ausgebildet sein. Wie bereits dargestellt liefert das Verfahren innerhalb des Fangbereichs bei genau bekannter Ausbreitungsgeschwindigkeit sowohl Informationen über eine Längenänderung des Wellenleiters bzw. der Rohrleitung, als auch über die absolute Länge des Wellenleiters.

Der Wellenleiter bzw. die in den Wellenleiter eingekoppelten Eingangssignale und aus diesem ausgekoppelten Ausgangssignale können physikalisch auf mehrere Arten realisiert sein. Zur Umformung des von dem VCO 30 gelieferten Eingangssignals E auf den im Wellenleiter ablaufenden Prozess der Wellenausbreitung ist ein Signalwandler 60a vorgesehen. Ein Signalwandler 60b formt schließlich das Ausgangssignal A in elektronisch auswertbare Signalformen um.

An dieser Stelle kurz zusammengefasst, beruht das angewendete Verfahren auf der Auswertung der Phasendifferenz zwischen Ein- und Ausgang des Wellenleiters. Die Phasendifferenz ist hierbei sowohl von der geometrischen Länge als auch der Phasengeschwindigkeit im Wellenleiter abhängig. Bestimmt wird daher die sogenannte elektrische Länge bei elektrischen Wellenleitern bzw. die optische Wellenlänge bei optischen Wellenleitern.

Wie bereits erläutert, kann die Erzeugung des Oszillatorsignals entweder mit einem Phasenregelkreis in Form einer klassischen PLL-Struktur mit spannungsgesteuertem Oszillator oder auf der Basis der direkten digitalen Synthese (DDS, gegebenenfalls mit nachgeschalteter PLL-Struktur) realisiert werden. Es hat sich gezeigt, daß insbesondere das DDS-Verfahren vorteilhaft ist. Gemäß Fig. 1 wird als Komponente 50 ein Vor-/Rückwärtszähler eingesetzt, der eine besonders einfache Form der Regelung des Verfahrens ermöglicht, die bei der Erzeugung des Oszillatorsignals durch eine PLL-Struktur vorteilhaft ist. Kommt die DDS-Technik zum Einsatz, wird hierfür eine programmierbare Baugruppe z.B. in Form eines Microcontrollers oder eines programmierbaren Logik-Arrays oder ähnlicher Mittel eingesetzt. Insofern läßt sich die gemäß Fig. 1 prinzipiell dargestellte Struktur weiter schaltungstechnisch vereinfachen.

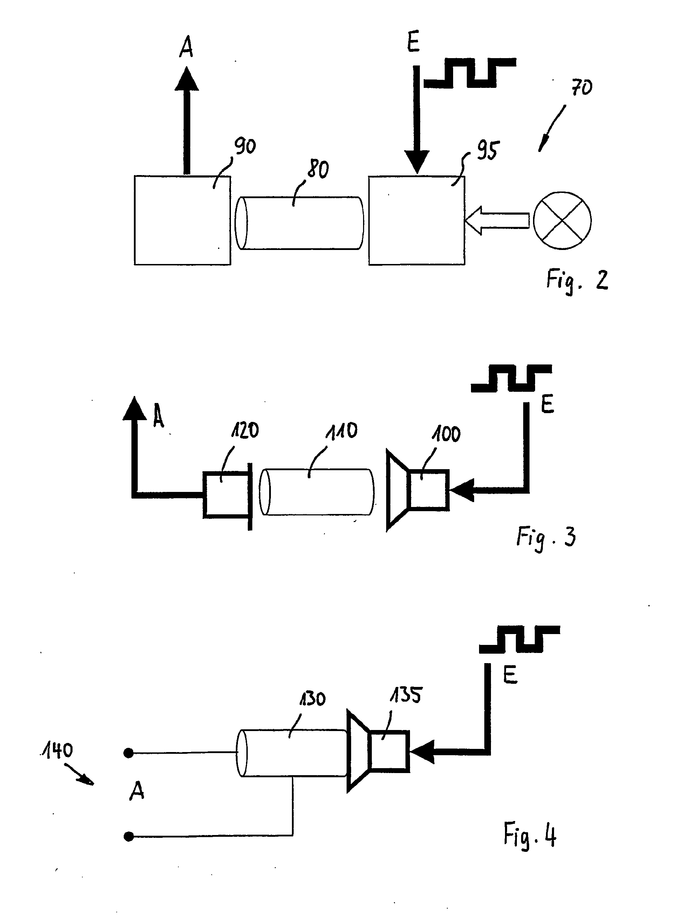

Die Figuren 2 bis 4 zeigen beispielhafte Ausführungsformen derartiger Signalwandler bzw. Wellenleiter.

Fig. 2 zeigt eine modulierbare Lichtquelle 70 mit einer Strahlungsquelle 71, einem Lichtwellenleiter 80 und einem Fotoelement 90. Bei der in der Figur gezeigten Ausführungsform wird das Licht der Strahlungsquelle 71 durch eine Pockelszelle 95 moduliert, wobei die Ansteuerung der Pockelszelle durch das periodische Signal des VCO 30 erfolgt. Die Pockelszelle 95 besteht wie bekannt aus einem elektrooptisch schaltbaren, eine Polarisationsebene linear polarisierten Lichtes unter dem Einfluss einer externen Spannung drehenden Material. Vor dem elektrooptisch schaltbaren Material befindet sich ein eine Polarisationsrichtung vorgebender Polarisator, dahinter ein Analysator. Beim elektrooptischen Schalten der Polarisationsebene des elektrooptischen Materials wird das hindurchlaufende Licht in Abhängigkeit von der angelegten Spannung ab- oder aufgeblendet. Ein derartiger Schaltvorgang erfolgt quasi instantan, sodass eine sehr hochfrequente Folge von Rechtecklichtimpulsen erzeugt und in den Lichtwellenleiter eingekoppelt werden kann. Diese Lichtimpulse werden von dem Fotoelement 90 detektiert und in ein elektrisches Signal umgesetzt, das mit dem Eingangssignal E am digitalen Phasendiskriminator verglichen und weiter verarbeitet werden kann. In Bezug auf Fig. 2 ist weiterhin anzumerken, dass Reflexionskonfigurationen ebenfalls möglich sind. Bei dieser hier nicht dargestellten Ausführungsform wird das modulierte Licht in einen endverspiegelten Lichtleiter eingekoppelt und trifft nach der Reflexion und dem Austreten aus dem Lichtleiter auf einen Strahlteiler, der das reflektierte Licht zum Fotoelement umlenkt.

Fig. 3 zeigt einen akustischen Signalgeber, insbesondere einen Ultraschallgenerator 100, einen Schallwellenleiter 110 und einen akustischen Signalempfänger, insbesondere ein Ultraschallmikrophon 120. Der Schallwellenleiter besteht - abhängig vom Frequenzbereich des Schalls - aus einem akustisch sehr gut leitenden Material. Bei Anwendung von Ultraschall ist der Schallwellenleiter ein massiver Festkörper, insbesondere ein metallischer dünner und langgestreckter Stab, der insbesondere aus dem gleichen Werkstoff wie die überwachte Rohrleitung bestehen kann. Der von dem Ultraschallgenerator erzeugte Schall kann entweder durch das Eingangssignal moduliert werden oder direkt den Signalverlauf des Eingangssignals aufweisen. Das Ultraschallmikrophon detektiert dann aus Trägheitsgründen entweder nur das aufmodulierte Signal oder den durch das direkt in ein Schallsignal überführte Eingangssignal E in Form des Ausgangssignals A und wandelt es in ein elektronisch auswertbares Signal um.

Die Ausführungsformen aus Fig. 2 und 3 bieten den Vorteil einer vollständig elektrisch passiven Wellenleitung im Wellenleiter und sind damit für explosions- oder brandgefährdete Rohrleitungsabschnitte geeignet.

Fig. 4 zeigt einen piezolektrischen Wellenleiter 130 in Verbindung mit einem Transducer 135 und einer Spannungsableitung 140. Der Transducer 135 wird von dem Eingangssignal E angesteuert und gibt ein periodisches Rechtecksignal in Form einer durch den Piezo laufenden Druckwelle in den piezoelektrischen Wellenleiter ab. In Abhängigkeit von der Länge des piezoelektrischen Wellenleiters und der Frequenz des durch den Transducer eingebrachten Signals bildet sich im Wellenleiter eine stehende Welle aus, bei der der Wellenleiter oszillatorisch Kontraktionen in Richtung seiner Längsachse ausführt. Diese Kontraktionen führen zur Generierung einer piezoelektrischen zeitlich periodischen Spannung, die als Ausgangssignal abgeleitet werden kann, und zwar nur dann, wenn der piezoelektrische Wellenleiter derartige Kontraktionen ausführt. Diese bedingen eine zeitlich konstante Phasendifferenz von $\Delta\varphi = \pi$ zwischen der Schwingungszustand des Anfangs- und des Endpunktes am piezoelektrischen Wellenleiter. Eine derartige Vorrichtung kann, bedingt durch die kurzen Abmessungen piezoelektrischer Bauelemente und Keramiken, für vornehmlich lokale Abstandsmessungen, beispielsweise bei Rohrleitungsmuffen und Verbindungsstücken oder kritischen Schraubverbindungen, eingesetzt werden.

Bezugszeichenliste

| 10 | Wellenleiter allgemein |
| 20 | Phasendiskriminator |
| 30 | spannungsgesteuerter Oszillator, VCO |
| 31 | Tiefpass |
| 32 | analoger Phasendiskriminator |
| 33 | Schwingquarz |
| 34 | Messwertausgang |
| 40, 40a | Teilereinheit |
| 50 | Vor-/Rückwärtszähler |
| 60a | Eingangssignalwandler |
| 60b | Ausgangssignalwandler |
| 70 | modulierbare Lichtquelle |
| 71 | Strahlungsquelle |
| 80 | Lichtwellenleiter |
| 90 | Fotoelement |
| 95 | Pockelszelle |
| 100 | Ultraschallgenerator |
| 110 | Schallwellenleiter |
| 120 | Ultraschallmikrophon |
| 130 | piezoelektrischer Wellenleiter |
| 135 | Transducer |
| 140 | Spannungsableitung |
| E | Eingangssignal |
| A | Ausgangssignal |
| D | Phasendifferenzsignal |

**Patentansprüche**

**1.** Verfahren zum Erfassen mechanischer Belastungen an einer Rohrleitung, insbesondere einer eingeerdeten Rohrleitung,
bei dem eine erste Gesamtheit von einem oder mehreren Wellenleitern parallel zur Rohrlängsachse entlang der Mantellinien des Rohrleitungszylinders verläuft, mittels derer eine Veränderung der Längsausdehnung der Rohrleitung registriert wird,
**dadurch gekennzeichnet, dass** ein Bestimmen einer Längenänderung mindestens des in oder an der Rohrleitung verlegten, mit dieser verbundenen Wellenleiters erfolgt, mit den Verfahrensschritten:

　- Einkoppeln eines periodischen Eingangssignals (E) in den Wellenleiter (10),

- Auskoppeln eines periodischen Ausgangssignals (A) aus dem Wellenleiter, Anlegen des Eingangssignals und des Ausgangssignals an eine Phasenvergleichsschaltung (20) zum Erzeugen eines Phasendifferenzsignals (D),
- Verändern der Eingangsfrequenz des Eingangssignals bis zum Erzeugen eines konstanten Phasendifferenzsignals,
- Überwachen des konstanten und Signalisierung eines sich verändernden Phasendifferenzsignals

und dass ein weiterer Wellenleiter schrauben- oder spulenartig um das Rohr verlaufend angeordnet ist, mittels dessen Veränderungen des Rohrumfangs registriert werden mittels den oben genannten Verfahrensschritten.

**2.** Verfahren nach Anspruch 1, **dadurch gekennzeichnet, dass** das Eingangssignal (E) und/oder das Ausgangssignal (A) einen harmonischen Signalverlauf aufweist.

**3.** Verfahren nach Anspruch 1, **dadurch gekennzeichnet, dass** das Eingangssignal (E) und/oder das Ausgangssignal (A) einen nicht harmonischen, insbesondere einen rechteckförmigen, Signalverlauf aufweist.

**4.** Verfahren nach einem der Ansprüche 1 bis 3, **dadurch gekennzeichnet, dass** das Ausgangssignal (A) ein durch den Wellenleiter transmittiertes Eingangssignal (E) ist.

**5.** Verfahren nach einem der Ansprüche 1 bis 3, **dadurch gekennzeichnet, dass** das Ausgangssignal (A) ein aus dem Wellenleiter reflektiertes Eingangssignal (E) ist.

**6.** Verfahren nach Anspruch 1 bis 5, **dadurch gekennzeichnet, dass** das Eingangssignal (E) in Form einer periodisch intensitätsmodulierten elektromagnetischen Strahlung in einen dielektrischen Wellenleiter, insbesondere einen Lichtwellenleiter oder einen Hohlleiter, eingekuppelt und das Ausgangssignal (A) in Form einer periodisch intensitätsmodulierten elektromagnetischen Strahlung ausgekoppelt wird.

**7.** Verfahren nach Anspruch 1 bis 5, **dadurch gekennzeichnet, dass** das Eingangssignal (E) in Form eines periodisch modulierten elektrischen Signals, insbesondere einer Wechselspannung, in einen elektrisch leitenden Wellenleiter, insbesondere ein elektrisch leitendes Kabel, eingekoppelt und das Ausgangssignal (A) in Form eines periodisch modulierten elektrischen Signals ausgekoppelt wird.

**8.** Verfahren nach Anspruch 1 bis 5, **dadurch gekenn-**

**zeichnet, dass** das Eingangssignal (E) in Form einer periodisch modulierten longitudinalen oder transversalen mechanischen Druckwelle zum Erzeugen einer Druckwelle, insbesondere einer Schallwelle oder Ultraschallwelle, in einen akustischen Wellenleiter, insbesondere ein Schallrohr oder einen Schallleiter, eingekoppelt und das Ausgangssignal (A) in Form eines periodisch modulierten Drucksignals, insbesondere eines akustischen Signals, ausgekoppelt wird.

**9.** Verfahren nach Anspruch 6 bis 8, **dadurch gekennzeichnet, dass** innerhalb des Wellenleiters (10) eine physikalische Signalwandlung, insbesondere eine piezoelektrische Umwandlung eines akustischen Eingangssignals in ein elektrisches Ausgangssignal oder eines elektrischen Eingangssignals in ein akustisches Ausgangssignal, erfolgt.

**10.** Vorrichtung geeignet zur Durchführung eines Verfahrens zum Erfassen mechanischer Belastungen an einer Rohrleitung gemäß einem der Ansprüche 1 bis 9, **dadurch gekennzeichnet, dass** die Vorrichtung ausgebildet ist zum Bestimmen einer Längenänderung mindestens des in oder an der Rohrleitung verlegten, mit dieser verbundenen Wellenleiters, wobei die Vorrichtung ausgebildet ist zum Einkoppeln eines periodischen Eingangssignals (E) in den Wellenleiter (10), zum Auskoppeln eines periodischen Ausgangssignals (A) aus dem Wellenleiter, zum Anlegen des Eingangssignals und des Ausgangssignals an eine Phasenvergleichsschaltung (20) zum Erzeugen eines Phasendifferenzsignals (D), zur Veränderung der Eingangsfrequenz des Eingangssignals bis zum Erzeugen eines konstanten Phasendifferenzsignals, zur Überwachung des konstanten und Signalisierung eines sich verändernden Phasendifferenzsignals, wobei an der Rohrwandung der Rohrleitung eine erste Gesamtheit von einem oder mehreren Wellenleitern parallel zur Rohrlängsachse entlang der Mantellinien des Rohrleitungszylinders verlaufend angeordnet ist und ein weiterer Wellenleiter schrauben- oder spulenartig um die Rohrleitung verlaufend angeordnet ist.

**11.** Vorrichtung nach Anspruch 10, **gekennzeichnet durch** einen gesteuerten Oszillator (30) zum Erzeugen des periodischen Eingangssignals (E) in Kopplung mit dem zu vermessenden Wellenleiter (10) und einem mit dem Eingangssignal und dem Ausgangssignal des Wellenleiters beaufschlagten, das Phasendifferenzsignal (D) ausgebenden Phasendiskriminator (20).

**12.** Vorrichtung nach Anspruch 11, **gekennzeichnet durch** eine Teüereinheit (40, 40a) zur Frequenzveränderung des gesteuerten Oszillators (30) in Verbindung mit einem **durch** das Phasendifferenzsignal (D) beeinflussten Vor-/Rückwärtszähler (50) zur Ansteuerung der Teilereinheit.

13. Vorrichtung nach Anspruch 11 und 12, **gekennzeichnet durch** eine **durch** den gesteuerten Oszillator (30) beeinflusste modulierbare Lichtquelle (70) in optischer Kopplung mit einem Lichtwellenleiter (80) sowie einem zwischen Lichtwellenleiter und digitalem Phasendiskriminator (20) zwischengeschalteten Fotoelement (90).

14. Vorrichtung nach Anspruch 13, **dadurch gekennzeichnet, dass** die modulierbare Lichtquelle (70) eine elektrooptisch durch den spannungsgesteuerten Oszillator (30) geschaltete Pockels-Zelle (95) aufweist.

15. Vorrichtung nach Anspruch 11 und 12, **gekennzeichnet durch** eine **durch** den gesteuerten Oszillator (30) beeinflusste Schallquelle, insbesondere einen Ultraschallgenerator (100) in akustischer Kopplung mit einem Schallwellenleiter (110) sowie einem zwischen Schallwellenleiter und Phasendiskriminator zwischengeschaltetem Schallempfänger, insbesondere einem Ultraschallmikrophon (120).

16. Vorrichtung nach Anspruch 11 und 12, **dadurch gekennzeichnet, dass** ein Wellenleiter in Form eines piezoelektrisch aktiven Wellenleiters (130) ausgeführt ist, wobei zwischen dem gesteuerten Oszillator (30) und dem piezoelektrischen Wellenleiter ein akustisch gekoppelter Transductor (135) oder ein Spannungsgeber und dem piezoelektrischen Wellenleiter und dem Phasendiskriminator (30) ein elektrischer Spannungsempfänger oder ein akustischer Empfänger angeordnet ist.

17. Vorrichtung nach Anspruch 11 und 12, **dadurch gekennzeichnet dass** der Wellenleiter ein elektrischer Leiter ist.

18. Verwendung einer Vorrichtung nach einem der Ansprüche 10-17 an eine Rohrleitung.

**Claims**

1. A method for detecting mechanical loads on a pipeline, in particular a buried pipeline, in which a first entirety of one or a plurality of waveguides runs parallel to the pipe longitudinal axis along the jacket lines of the pipeline cylinder, by means of which a change of the longitudinal extent of the pipeline is registered, **characterised in that** determining a length change at least of the waveguide laid in or on the pipeline and connected to the same takes place, with the method steps:

- coupling a periodic input signal (E) into the waveguide (10),
- coupling a periodic output signal (A) out of the waveguide, applying the input signal and the output signal to a phase comparator circuit (20) for generating a phase differential signal (D),
- changing the input frequency of the input signal until a constant phase differential signal is generated,
- monitoring the constant phase differential signal and signalling a changing phase differential signal,

and **in that** a further waveguide is arranged running around the pipe in a screw- or coil-like manner, by means of which changes in the pipe circumference are registered by means of the above-mentioned method steps.

2. The method according to Claim 1, **characterised in that** the input signal (E) and/or the output signal (A) has a harmonic signal characteristic.

3. The method according to Claim 1, **characterised in that** the input signal (E) and/or the output signal (A) has a non-harmonic, in particular a rectangular signal characteristic.

4. The method according to one of Claims 1 to 3, **characterised in that** the output signal (A) is an input signal (E) transmitted through the waveguide.

5. The method according to one of Claims 1 to 3, **characterised in that** the output signal (A) is an input signal (E) reflected out of the waveguide.

6. The method according to Claims 1 to 5, **characterised in that** the input signal (E) is coupled in the form of periodically intensity modulated electromagnetic radiation into a dielectric waveguide, particularly an optical waveguide or a hollow waveguide, and the output signal (A) is coupled out in the form of periodically intensity modulated electromagnetic radiation.

7. The method according to Claims 1 to 5, **characterised in that** the input signal (E) is coupled in the form of a periodically modulated signal, particularly an AC voltage, into an electrically conductive waveguide, particularly an electrically conductive cable, and the output signal (A) is coupled out in the form of a periodically modulated electrical signal.

8. The method according to Claims 1 to 5, **characterised in that** the input signal (E) is coupled in the form of a periodically modulated longitudinal or transverse mechanical pressure wave for generating a pressure wave, particularly a sound wave or ultrasound wave, into an acoustic waveguide, particularly a sonic pipe or a sonic conductor, and the output signal (A) is coupled out in the form of a periodically modulated pressure signal, particularly an acoustic signal.

9. The method according to Claims 6 to 8, **characterised in that** a physical signal change, particularly a piezoelectric conversion of an acoustic input signal into an electrical output signal or an electrical input signal into an acoustic output signal, takes place within the waveguide (10).

10. A device suitable for carrying out a method for detecting mechanical loads on a pipeline according to one of Claims 1 to 9, **characterised in that** the device is constructed for determining a length change at least of the waveguide laid in or on the pipeline and connected to the same, wherein the device is constructed for coupling a periodic input signal (E) into the waveguide (10), for coupling a periodic output signal (A) out of the waveguide, for applying the input signal and the output signal to a phase comparator circuit (20) for generating a phase differential signal (D), for changing the input frequency of the input signal until a constant phase differential signal is generated, for monitoring the constant phase differential signal and signalling a changing phase differential signal, wherein on the pipe wall of the pipeline, a first entirety of one or a plurality of waveguides is arranged running parallel to the pipe longitudinal axis along the jacket lines of the pipeline cylinder and a further waveguide is arranged running around the pipeline in a screw- or coil-like manner.

11. The device according to Claim 10, **characterised by** a controlled oscillator (30) for generating the periodic input signal (E) in coupling with the waveguide (10) to be measured and a phase discriminator (20) loaded with the input signal and the output signal of the waveguide and outputting the phase differential signal (D).

12. The device according to Claim 11, **characterised by** a divider unit (40, 40a) for the frequency change of the controlled oscillator (30) in connection with an up-/downcounter (50), influenced by the phase differential signal (D), for controlling the divider unit.

13. The device according to Claims 11 and 12, **characterised by** a modulatable light source (70) influenced by the controlled oscillator (30) in optical coupling with an optical waveguide (80) and also a photoelement (90) connected between optical waveguide and digital phase discriminator (20).

14. The device according to Claim 13, **characterised in that** the modulatable light source (70) has a Pockels cell (95) electro-optically switched by the voltage-controlled oscillator (30).

15. The device according to Claims 11 and 12, **characterised by** a sound source influenced by the controlled oscillator (30), particularly an ultrasound generator (100), in acoustic coupling with a sonic waveguide (110) and also a sound receiver, particularly an ultrasound microphone (120), connected between sonic waveguide and phase discriminator.

16. The device according to Claims 11 and 12, **characterised in that** a waveguide is realised in the form of a piezoelectrically active waveguide (130), wherein an acoustically coupled transducer (135) or a voltage sensor is arranged between the controlled oscillator (30) and the piezoelectric waveguide, and an electrical voltage receiver or an acoustic receiver is arranged between the piezoelectric waveguide and the phase discriminator (30).

17. The device according to Claims 11 and 12, **characterised in that** the waveguide is an electrical conductor.

18. A use of a device according to one of Claims 10-17 on a pipeline.

**Revendications**

1. Procédé pour enregistrer des charges mécaniques sur une conduite, en particulier une conduite enterrée,

dans lequel un premier ensemble d'un ou de plusieurs guides d'ondes est agencé parallèlement à l'axe longitudinal du tuyau le long des génératrices du cylindre de conduite, ensemble qui permet d'enregistrer une variation de l'extension longitudinale de la conduite,

**caractérisé en ce qu'**une détermination d'une variation de longueur au moins du guide d'ondes posé dans ou sur la conduite, relié à celle-ci, présentant les étapes de procédé suivantes :

- injection d'un signal d'entrée (E) périodique dans le guide d'ondes (10),
- dissociation d'un signal de sortie (A) périodique du guide d'ondes, application du signal d'entrée et du signal de sortie sur un circuit de comparaison de phase (20) pour générer un signal de différence de phase (D),
- modification de la fréquence d'entrée du signal d'entrée jusqu'à la génération d'un signal constant de différence de phase,
- contrôle du signal constant de différence de phase et signalisation d'un signal de différence de phase qui varie

et **en ce qu'**un autre guide d'ondes est disposé en forme de vis ou de bobine en s'étendant autour du tuyau, lequel permet d'enregistrer des variations du pourtour du tuyau au moyen des étapes de procédé susmentionnées.

2. Procédé selon la revendication 1, **caractérisé en ce que** le signal d'entrée (E) et/ou le signal de sortie (A) présente(nt) un tracé de signal harmonique.

3. Procédé selon la revendication 1, **caractérisé en ce que** le signal d'entrée (E) et/ou le signal de sortie (A) présente(nt) un tracé de signal non harmonique, en particulier de forme rectangulaire.

4. Procédé selon l'une des revendications 1 à 3, **caractérisé en ce que** le signal de sortie (A) est un signal d'entrée (E) transmis par le guide d'ondes.

5. Procédé selon l'une des revendications 1 à 3, **caractérisé en ce que** le signal de sortie (A) est un signal d'entrée (E) réfléchi à la sortie du guide d'ondes.

6. Procédé selon les revendications 1 à 5, **caractérisé en ce que** le signal d'entrée (E) est injecté sous la forme d'un rayonnement électromagnétique, modulé périodiquement en intensité, dans un guide d'ondes diélectrique, en particulier un guide d'ondes optiques ou un "conducteur creux", et le signal de sortie (A) est dissocié sous la forme d'un rayonnement électromagnétique, modulé périodiquement en intensité.

7. Procédé selon les revendications 1 à 5, **caractérisé en ce que** le signal d'entrée (E) est injecté sous la forme d'un signal électrique modulé périodiquement, en particulier une tension alternative, dans un guide d'ondes électroconducteur, en particulier, un câble électroconducteur et le signal de sortie (A) est dissocié sous la forme d'un signal électrique modulé périodiquement.

8. Procédé selon les revendications 1 à 5, **caractérisé en ce que** le signal d'entrée (E) est injecté sous la forme d'une onde de pression mécanique longitudinale ou transversale, modulée périodiquement, pour générer une onde de pression, en particulier une onde sonore ou une onde ultrasonore, dans un guide d'ondes acoustique, en particulier un tuyau acoustique ou un conducteur acoustique, et le signal de sortie (A) est dissocié sous la forme d'un signal de pression modulé périodiquement, en particulier d'un signal acoustique.

9. Procédé selon les revendications 6 à 8, **caractérisé en ce qu'**une conversion de signal physique, en particulier une transformation piézoélectrique d'un signal d'entrée acoustique en un signal de sortie électrique ou d'un signal d'entrée électrique en un signal de sortie acoustique s'effectue à l'intérieur du guide d'ondes (10).

10. Dispositif approprié pour mettre en oeuvre un procédé pour l'enregistrement de charges mécaniques sur une conduite selon l'une des revendications 1 à 9, **caractérisé en ce que** le dispositif est conçu pour déterminer une variation en longueur au moins du guide d'ondes posé dans ou sur la conduite, relié à celle-ci, le dispositif étant conçu pour l'injection d'un signal d'entrée (E) périodique dans le guide d'ondes (10), pour la dissociation d'un signal de sortie (A) périodique du guide d'ondes, pour l'application du signal d'entrée et du signal de sortie sur un circuit de comparaison de phase (20) pour générer un signal de différence de phase (D), pour la variation de la fréquence d'entrée du signal d'entrée jusqu'à la génération d'un signal constant de différence de phase, pour le contrôle du signal constant de différence de phase et la signalisation d'un signal variable de différence de phase, un premier ensemble d'un ou de plusieurs guides d'ondes étant disposé sur la paroi du tuyau de la conduite, agencé parallèlement à l'axe longitudinal du tuyau le long des génératrices du cylindre de conduite et un autre guide d'ondes étant disposé en forme de vis ou de bobine, agencé autour de la conduite.

11. Dispositif selon la revendication 10, **caractérisé par** un oscillateur (30) commandé pour générer le signal d'entrée (E) périodique en association avec le guide d'ondes (10) à mesurer et un discriminateur de phase (20) alimenté avec le signal d'entrée et le signal de sortie du guide d'ondes et délivrant le signal de différence de phase (D).

12. Dispositif selon la revendication 11, **caractérisé par** une unité diviseur (40, 40a) pour la variation en fréquence de l'oscillateur (30) commandé en liaison avec un compteur avant/arrière (50) influencé par le signal de différence de phase (D) pour l'activation de l'unité diviseur.

13. Dispositif selon les revendications 11 et 12, **caractérisé par** une source lumineuse (70) modulable, influencée par l'oscillateur (30) commandé en association optique avec un guide d'ondes optiques (80) et un élément photoélectrique (90) intercalé entre le guide d'ondes optiques et le discriminateur numérique de phase (20).

14. Dispositif selon la revendication 13, **caractérisé en ce que** la source lumineuse (70) modulable présente une cellule de Pockels (95) commutée de façon électro-optique par l'oscillateur (30) commandé par tension.

**15.** Dispositif selon les revendications 11 et 12, **caractérisé par** une source sonore influencée par l'oscillateur (30) commandé, en particulier un générateur d'ultrasons (100) en association acoustique avec un guide d'ondes sonores (110) et un récepteur acoustique intercalé entre le guide d'ondes sonore et le discriminateur de phase, en particulier un microphone à ultrasons (120).

**16.** Dispositif selon les revendications 11 et 12, **caractérisé en ce qu'**un guide d'ondes est réalisé sous la forme d'un guide d'ondes (130) actif au plan piézoélectrique, un transducteur (135) couplé au plan acoustique ou un générateur de tension étant disposé entre l'oscillateur (30) commandé et le guide d'ondes piézoélectrique et un récepteur de tension électrique ou un récepteur acoustique étant disposé entre le guide d'ondes piézoélectrique et le discriminateur de phase (30).

**17.** Dispositif selon les revendications 11 et 12, **caractérisé en ce que** le guide d'ondes est un conducteur électrique.

**18.** Utilisation d'un dispositif selon l'une des revendications 10 à 17 sur une conduite.

Fig. 1

A

E

70

90

80

95

Fig. 2

A

120

110

100

E

Fig. 3

130

135

E

140

A

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19725431 C2